# EUROPEAN PATENT APPLICATION

(11) **EP 2 663 118 A1**
(43) Date of publication of application: **13.11.2013**
(21) Application number: 11858281.6
(22) Date of filing: 15.11.2011
(51) Int. Cl.: H04W 24/02

(54) **SWITCHING PARAMETER OPTIMIZATION METHOD AND SYSTEM**

(30) Priority: 12.02.2011 CN 201110039355
(71) Applicant: ZTE Corporation, Shenzhen, Guangdong 518057 (CN)
(72) Inventor: DONG, Yuexin, Shenzhen Guangdong 518057 (CN); XU, Yunxiang, Shenzhen Guangdong 518057 (CN)
(74) Representative: Willquist, Sofia Ellinor
(86) International application number: PCT/CN2011/082226
(87) International publication number: WO 2012/106962

(57) **Abstract**

The present document discloses a handover parameter optimization method, wherein, a network side acquires a Cumulative Density Function curve (CDF(i)) of a corresponding measurement of a cell handover region according to a measurement value reported by a User Equipment (UE); when a mobility fault occurs in a cell, the network side determines a fault degree of the cell according to an area of a region surrounded by the Cumulative Density Function curve CDF(i) of the measurement reported by the cell and a threshold curve (RLFthrd(i)) of the measurement; and the network side modifies the corresponding handover parameters according to the fault degree of the cell, and causes the area of the region surrounded by the RLFthrd(i) curve and the CDF(i) curve to be reduced. Correspondingly, the present document also discloses a handover parameter optimization system. In the present document, based on a statistical result reported by the UE, the parameters required to be modified and a modification degree of each parameter are determined according to the handover fault degree, so that the optimization speed can be improved, and at the same time, the performance of the self-optimization can also be improved.

## Description

### Technical Field

The present document relates to the wireless communication field, and in particular, to a handover parameter optimization method and system.

### Background of the Related Art

In an LTE system, there are a lot of network parameters, and the relativity correlation-ship is strong, and there is a relatively high complexity. In addition, the system requires that the configuration and management of the newly joined base stations needs a minimum manual intervention, and this puts forward a new requirement on the operation and maintenance of the network. In order to solve the above-mentioned problem, a Self-Organizing and Self-Optimization Network (SON) is proposed and considered as the most effective means which reduces the cost and the operation complexity. The SON function requires to achieve the self-configuring, self-optimizing and self-mending, wherein, the self-configuring process is that the newly deployed node learns the necessary basic system operation configuration independently through the "automatic installation process", thus realizing the automatic configuration; the self-optimizing process is to use the measurement result of the User Equipment (UE) to adjust the network automatically; and the self-mending process is to automatically detect and locate most problematic positions, and solve the problem through a self-mending mechanism.

The SON can reduce the cost and operation complexity to a great extent, so the 3rd Generation Partnership Project (3GPP) organization has devoted to introducing the SON into the LTE standard all the times to get attention increasingly. Now the 3GPP already resolves the self-configuring and self-optimizing in the SON into a plurality of functions in detail, and describes each function in detail, and has pointed out the object to be realized. Wherein, the main object of the Mobility Robustness Optimization (MRO) is to solve the common faults in the handover process, such as, handing over too early, handing over too late, handing over to a wrong cell, etc. Since the handover performed in the LTE system is all hard handover, in this way, after the handover flow is triggered by the measurement report of the UE, once the Radio Link Failure (RLF) occurs in the UE, then the UE will not have a backup communication link, and can only drop the call. So the RLF occurred in the UE is the focal point which receives attention from the MRO in the SON, and is also a problem which needs to be avoided as far as possible in the process of configuring the handover parameters.

At present, the strategy for the handover parameters self-optimizing generally is that, after confirming that a fault occurs in the cell, the Operation Administration and Maintenance (OAM) centre will modify the associated parameters according to the fault type, and normally adopt a mode in which stepwise modification strategy is used to try with the parameters successively one by one, so the optimization speed is relatively slow and the accuracy is relatively low, thus the performance of the self-optimization is relatively low.

### Summary of the Invention

In view of this, the main object of the present document is to provide a handover parameter optimization method and system, which can improve the optimization speed and improve the optimization accuracy, thus improving the performance of the self-optimization.

In order to achieve the above-mentioned object, the technical scheme of the present document is realized as follows:
a handover parameter optimization method is provided, wherein, a network side acquires a Cumulative Density Function curve (CDF(i)) of a corresponding measurement of a cell handover region according to a measurement value reported by a User Equipment (UE), wherein, the i indicates a type of the measurement, and the method comprises:
   when a mobility fault occurs in a cell, the network side determining a fault degree of the cell according to an area of a region surrounded by the Cumulative Density Function curve CDF(i) of the measurement reported by the cell and a threshold curve (RLFthrd(i)) of the measurement; and
   the network side modifying corresponding handover parameters according to the fault degree of the cell, and causing the area of the region surrounded by the RLFthrd(i) curve and the CDF(i) curve to be reduced.

The measurement is Reference Signal Receiving Power (RSRP) or Reference Signal Received Quality (RSRQ).

The mobility fault is: handing over too late, handing over too early, or handing over to a wrong cell.

The handover parameters comprise one or more of the following terms: a cell individual offset (CIO), a delay parameter, a time to trigger (TTT), a measurement event offset, a measurement event threshold, a measurement report interval, and a measurement report amount.

The network side sets a maximum number of sample points of the Cumulative Density Function curve (CDF(i)) of the measurement, and
the network side acquiring a Cumulative Density Function curve (CDF(i)) of each measurement of a cell handover region according to a measurement value reported by a User Equipment (UE) is: to update the corresponding Cumulative Density Function curve (CDF(i)) according to the maximum number of the sample points and the measurement value reported by the UE.

A handover parameter optimization system is provided, comprising: a Cumulative Density Function curve acquiring unit, a cell fault degree determining unit and a handover parameter modifying unit; wherein,
the Cumulative Density Function curve acquiring unit is configured to acquire a Cumulative Density Function curve (CDF(i)) of a corresponding measurement of a cell handover region according to a measurement value reported by a User Equipment (UE), wherein, the i indicates a type of the measurement;
the cell fault degree determining unit is configured to, when a mobility fault occurs in a cell, determine a fault degree of the cell according to an area of a region surrounded by the Cumulative Density Function curve CDF(i) of the measurement reported by the cell acquired by the Cumulative Density Function curve acquiring unit and a threshold curve (RLFthrd(i)) of the measurement; and
the handover parameter modifying unit is configured to modify corresponding handover parameters according to the fault degree of the cell determined by the cell fault degree determining unit, and cause the area of the region surrounded by the RLFthrd(i) curve and the CDF(i) curve to be reduced.

The Cumulative Density Function curve acquiring unit acquiring a Cumulative Density Function curve (CDF(i)) of a corresponding measurement of a cell handover region according to a measurement value reported by a User Equipment (UE) is: to acquire the corresponding Cumulative Density Function curve (CDF(i)) according to Reference Signal Receiving Power (RSRP) or Reference Signal Received Quality (RSRQ) reported by the UE.

The cell fault degree determining unit determining the fault degree of the cell when a mobility fault occurs in the cell is: to determine the fault degree of the cell when handing over too late, handing over too early or handing over to a wrong cell.

The handover parameters modified by the handover parameter modifying unit comprise one or more of the following terms: a cell individual offset (CIO), a delay parameter, a time to trigger (TTT), a measurement event offset, a measurement event threshold, a measurement report interval, and a measurement report amount.

The Cumulative Density Function curve acquiring unit is further configured to set a maximum number of sample points of the Cumulative Density Function curve (CDF(i)) of the measurement, and update the corresponding Cumulative Density Function curve (CDF(i)) according to the maximum number of the sample points and the measurement value reported by the UE.

Through the handover parameter optimization method and system of the embodiment of the present document, the network side acquires the Cumulative Density Function curve (CDF(i)) of the corresponding measurement of the cell handover region according to the measurement value reported by the UE; when the mobility fault occurs in the cell, the network side determines the fault degree of the cell according to the area of the region surrounded by the Cumulative Density Function curve CDF(i) of the measurement reported by the cell and the threshold curve (RLFthrd(i)) of the measurement; and the network side modifies the corresponding handover parameters according to the fault degree of the cell, and causes the area of the region surrounded by the RLFthrd(i) curve and the CDF(i) curve to be reduced. In the embodiment of the present document, on the basis of the statistical result reported by the UE, according to the handover fault degree, the parameters required to be modified and the modification degree of each parameter are determined. The cell only needs to modify all parameters once to realize the optimization of the fault, thus the optimization speed can be improved, and the performance of the self-optimization at the same time also can be improved.

### Brief Description of Drawings

FIG. 1 is a flow chart of a handover parameter optimization method according to the present document;
FIG. 2 is a diagram of a movement process of a UE in the network according to embodiment 1 of the present document;
FIG. 3A is a distribution diagram of signal quality before optimization according to embodiment 1 of the present document;
FIG. 3B is a distribution diagram of signal quality after optimization according to embodiment 1 of the present document;
FIG. 4 is a diagram of a movement process of a UE in the network according to embodiment 2 of the present document;
FIG. 5A is a distribution diagram of signal quality before optimization according to embodiment 2 of the present document;
FIG. 5B is a distribution diagram of signal quality after optimization according to embodiment 2 of the present document;
FIG. 6 is a diagram of a movement process of a UE in the network according to embodiment 3 of the present document; and
FIG. 7 is a distribution diagram of signal quality before optimization according to embodiment 3 of the present document.

### Preferred Embodiments of the Invention

The object of the present document is to provide a handover parameter optimization method, which starts from the inherent problem of the MRO fault, performs the quantitative analysis on the fault degree through the statistical method, and finally can improve the speed and accuracy of the self-optimization of the cell handover parameters effectively.

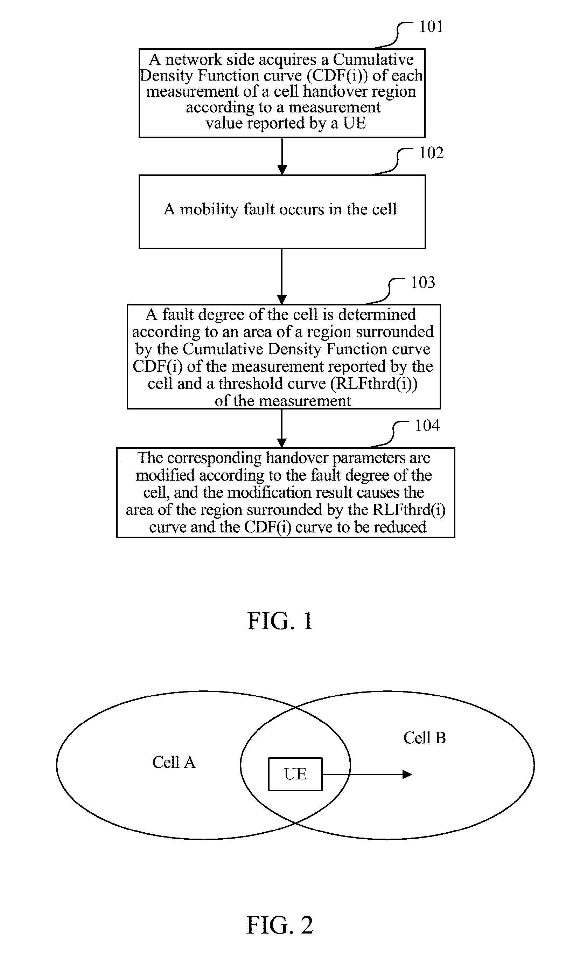

The handover parameter optimization method and system described in the embodiments of the present document are put forward mainly according to the application characteristic and relevant demand of the self-optimizing of the handover parameters. FIG. 1 is a flow chart of the handover parameter optimization method described in the embodiments of the present document, and as shown in FIG. 1, the method includes the following steps:
in step 101, a network side acquires a Cumulative Density Function curve (CDF(i)) of each measurement of a cell handover region according to a measurement value reported by a User Equipment (UE), wherein, the i indicates a type of the measurement.

Specifically, during the operation process of the cell, the network side collects and summarizes continually the measurement values reported by the UE when the measurement event is satisfied, and acquires the Cumulative Density Function curve (CDF(i)) of the corresponding measurement of the cell handover region through these collected measurement values. The measurement is generally the Reference Signal Receiving Power (RSRP), the Reference Signal Received Quality (RSRQ), etc.

It needs to be illustrated that the maximum number of sample points of the Cumulative Density Function curve (CDF(i)) of each measurement can be set, and the corresponding Cumulative Density Function curve (CDF(i)) is updated according to the maximum number of the sample points and the measurement value reported by the UE; when the number of the sample points in the Cumulative Density Function curve (CDF(i)) is greater than the set maximum number of the sample points, then the sample point collected foremost is discarded, which makes the number of the sample points in the Cumulative Density Function curve (CDF(i)) not greater than the set maximum number of the sample points. The maximum number of the sample points can be set according to the experience or actual demand.

In step 102, a mobility fault occurs in the cell.

Here, the mobility fault can be handing over too late, handing over too early, or handing over to a wrong cell, etc.

In step 103, a fault degree of the cell is determined according to an area of a region surrounded by the Cumulative Density Function curve CDF(i) of the measurement reported by the cell and a threshold curve (RLFthrd(i)) of the measurement.

Here, the network side determines the thresholds of different measurements when the RLF occurs in the cell according to the wireless environments of different cells and the measurement information kept by the UE when the RLF occurs, which is indicated as the RLFthrd(i), and the i represents the type of the measurement, and the measurement is configured by the system and sent to the UE through an air interface signaling.

The region surrounded by the CDF(i) and the RLFthrd(i) is a region which is on the left side of the RLFthrd(i) and is surrounded by the CDF(i) curve.

In step 104, the corresponding handover parameters are modified according to the fault degree of the cell, which causes the area of the region surrounded by the RLFthrd(i) curve and the CDF(i) curve to be reduced.

Here, the handover parameters include one or more of following terms: a cell individual offset (CIO), a delay parameter, a time to trigger (TTT), a measurement event offset, a measurement event threshold, a measurement report interval, and a measurement report amount, etc. When the handover parameters are modified, one parameter or a combination of several parameters can be modified at one time. The step length of the modification is determined according to the fault degree of the cell, and the result of the modification can reduce the area of the region which is on the left side of the RLFthrd(i) and is surrounded by the CDF(i) curve.

It needs to be illustrated that the updating of the CDF(i) curve performed by the network side will not be interrupted due to the mobility fault occurring in the cell; as long as the UE reports the measurement value when the measurement event is satisfied, the network side updates the corresponding CDF(i).

The present document further puts forward a handover parameter optimization system correspondingly, which includes: a Cumulative Density Function curve acquiring unit, a cell fault degree determining unit and a handover parameter modifying unit; wherein,
the Cumulative Density Function curve acquiring unit is configured to acquire a Cumulative Density Function curve (CDF(i)) of a corresponding measurement of a cell handover region according to a measurement value reported by a User Equipment (UE), wherein, the i indicates a type of the measurement;
the cell fault degree determining unit is configured to, when a mobility fault occurs in a cell, determine a fault degree of the cell according to an area of a region surrounded by the Cumulative Density Function curve CDF(i) of the measurement reported by the cell and acquired by the Cumulative Density Function curve acquiring unit and a threshold curve (RLFthrd(i)) of the measurement; and
the handover parameter modifying unit is configured to modify corresponding handover parameters according to the fault degree of the cell determined by the cell fault degree determining unit, and cause the area of the region surrounded by the RLFthrd(i) curve and the CDF(i) curve to be reduced.

The Cumulative Density Function curve acquiring unit acquiring a Cumulative Density Function curve (CDF(i)) of a corresponding measurement of a cell handover region according to a measurement value reported by a User Equipment (UE) is: to acquire the corresponding Cumulative Density Function curve (CDF(i)) according to Reference Signal Receiving Power (RSRP) or Reference Signal Received Quality (RSRQ) reported by the UE.

The cell fault degree determining unit determining the cell fault degree when a mobility fault occurs in the cell is: to determine the fault degree of the cell when handing over too late, handing over too early or handing over to a wrong cell.

The handover parameters modified by the handover parameter modifying unit include one or more of following terms: a cell individual offset (CIO), a delay parameter, a time to trigger (TTT), a measurement event offset, a measurement event threshold, a measurement report interval, and a measurement report amount.

The Cumulative Density Function curve acquiring unit is further configured to set the maximum number of sample points of the Cumulative Density Function curve (CDF(i)) of the measurement, and update a corresponding Cumulative Density Function curve (CDF(i)) according to the maximum number of the sample points and the measurement value reported by the UE.

The scheme of the present document is further illustrated in detail in combination with the embodiments hereinafter.

### Embodiment 1:

the present embodiment describes the scene that the handover of the UE is too late, and the movement process of the UE in the network is shown as FIG. 2. In the picture, the UE moves from a cell A (source cell) to a cell B (target cell), and the RLF occurs in the position where the UE locates.

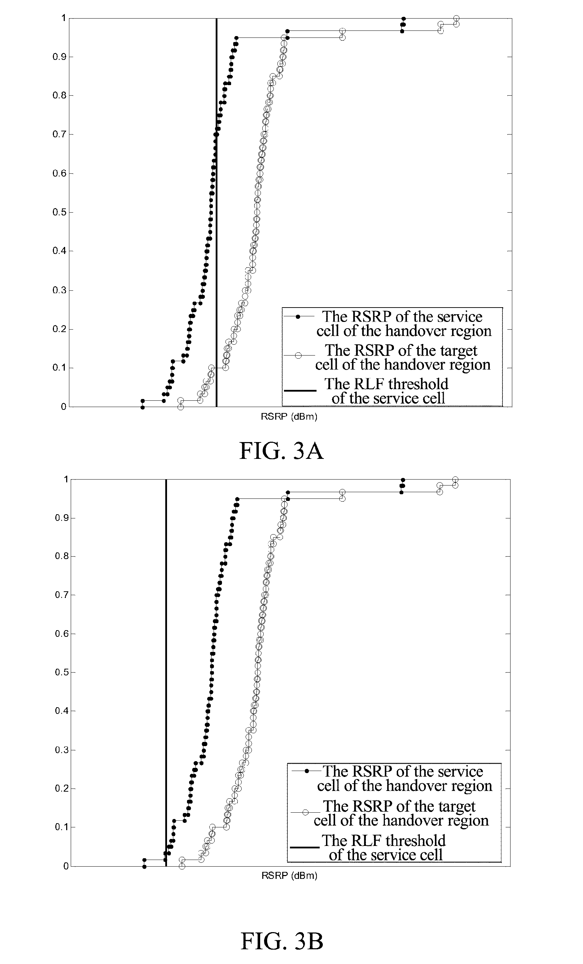

The present embodiment mainly includes the following steps:
11). the RLF occurs when the UE hands over from the cell A to the cell B;
12). the handover measurement in the current cell A is the RSRP, so the cell A calls out the Cumulative Density Function curve CDF (RSRP) acquired according to the history measurement RSRP reported by the UE in the handover region of the present cell;
13). according to the wireless scene of the present cell, and according to the threshold setting of the wireless link failure in the protocol specification, the RSRP threshold RLFthrd_A (RSRP) is acquired when the RLF occurs in the present cell under the wireless environment;
14). comparing the curve CDF (RSRP) and RLFthrd_A (RSRP) (as shown in FIG. 3A), it is found that in the handover region, about 70% of the probability density function curve of the present cell RSRP in the handover region reported by the UE in the present cell is within the RLFthrd_A (RSRP), and that numerical value indicates that the fault degree of the cell is relatively serious, that is, the configuration of the handover parameters of the cell is relatively unreasonably, and the handover parameters need to be adjusted, so as to cause the part of the CDF curve of the present cell RSRP which is within the RLFthrd_A (RSRP) to be reduced to less than 10%;
15). the cell A determines that the RLF fault occurs in the UE is due to that the handover parameters of the cell A do not match the movement speeds of most UEs, and the fault degree also can be seen from FIG. 3A.
16). according to the pre-configured optimization strategy and the fault degree of the cell, it is determined that the handover parameters related to the movement speed need to be adjusted, including the handover trigger time and the handover delay value; and meanwhile, the step lengths for the two parameter modifications need to enable their combined result to make the whole distribution of the RSRP value of the handover region of the cell A move to right for above 3dB, to deal with the scene of the high speed movement of the UE;
17). the cell A informs the OAM of the comprehensive scheme of the parameter optimization including the parameters required to be modified, and the OAM informs the cell A, after evaluating the enforceability of the parameter optimization, to perform the modification according to the designated value;
18). after the network runs for a period of time, the evaluation result of the new parameter is acquired. The result after the modification in the present embodiment is shown in FIG. 3B.

### Embodiment 2:

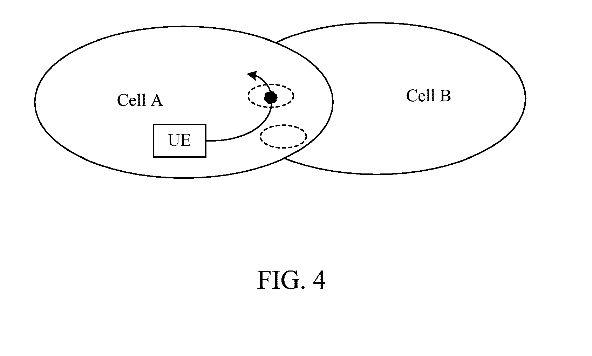

the present embodiment describes the scene that the handover of the UE is too early, and the movement process of the UE in the network is shown as FIG. 4. When the UE moves in the cell A (source cell), the measurement condition is satisfied, and it is reported to the cell B (target cell), and then the cell A initiates a flow of the UE handing over from the cell A to the cell B according to the measure report of the UE, but the RLF occurs right after the UE finishes the handover to the cell B, and it returns back to the cell A through another cell reselection.

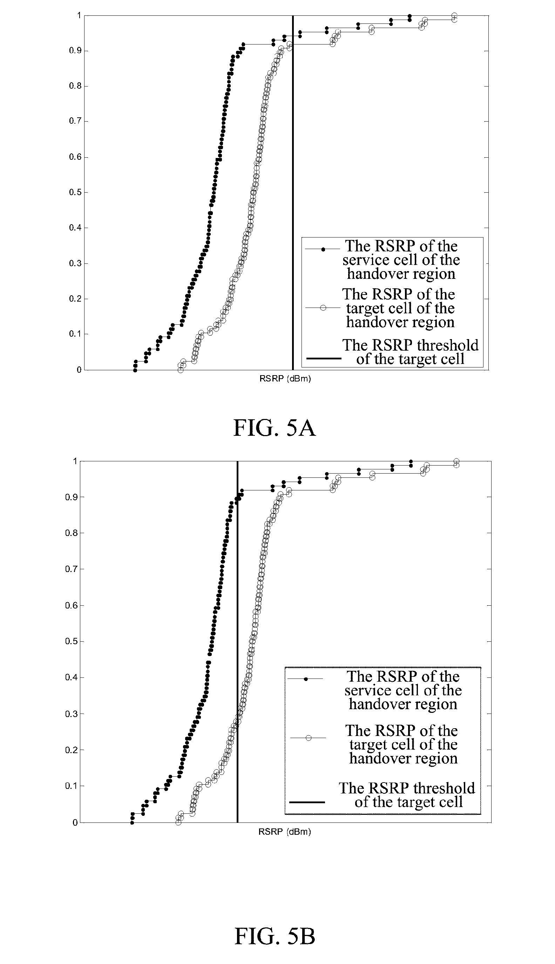

The present embodiment mainly includes the following steps:
21). the RLF occurs when the UE hands over from the cell A to the cell B;
22). the cell B judges that the fault of the UE handing over too early occurs in the cell A through the rebuilding message of the UE, and then informs the cell A of the fault information that the handover is too early in the cell A through the HANDOVER REPORT message on the X2 interface;
23). the handover measurement sent by the cell A is the RSRP, and the RLF occurs in the UE in the cell B, so the cell A calls out the Cumulative Density Function curve CDF (RSRP) of the measurement RSRP, which is about the cell B and reported by the UE in the handover region in the historical information, and at the same time the cell B, in the wireless scene in the present cell, is able to deduce and acquire the RSRP threshold RLFthrd_B (RSRP) when the BRLF occurs in the cell according to the threshold setting of the wireless link failing in the protocol specification;
24). by comparing the curve CDF (RSRP) with RLFthrd_B (RSRP) (as shown in FIG. 5A), it is found that in the handover region, about 90% of the signal quality distribution curve of the cell B reported by the UE in the present cell is within the RLFthrd_B (RSRP), that is to say, the threshold for handing over from the cell A to the cell B configured by the cell A is relatively low, which causes that the UE reports the measurement result under the situation that the signal of the cell B is very weak, thus leading to the problem that handing over too early occurs in the fault UE;
25). according to the result from FIG. 5A and the configuration of the wireless scene, it can be known that the previous lower cell individual offset value of the cell A and cell B causes the UE handing over to the cell B very easily; the optimization strategy required to be used is to make the offset value between the cells larger, to make the amount of the RSRP CDF curve of the cell B within the RLFthrd_B (RSRP) be reduced to less than 30%; there is a trend that the UE will move toward the cell B in the movement process, so the threshold can be a bit greater than that of the present cell;
26). according to the optimization strategy, the cell A will use the offset value between the cell A and the cell B required to be optimized, and then informs the OAM of the parameters required to be modified; and the OAM informs the cell A and the cell B, after evaluating the enforceability of the parameter optimization, to perform the modification according to the designated value;
27). after the network runs for a period of time, the evaluation result of the new parameter is acquired. The result after the modification in the present embodiment is shown in FIG. 5B.

### Embodiment 3:

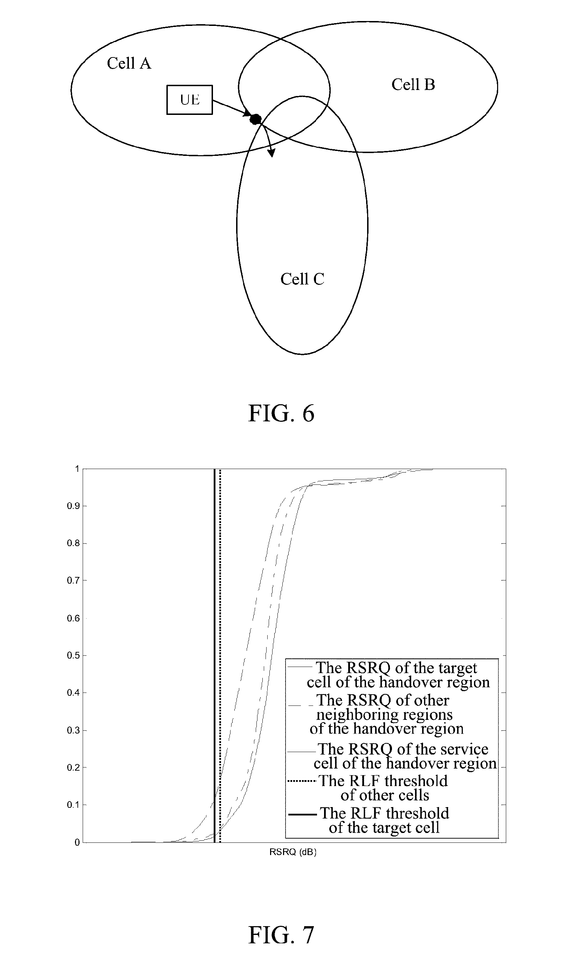

the present embodiment describes the scene that the UE hands over to a wrong cell, and the movement process of the UE in the network is shown as FIG. 6. When the UE moves in the cell A (source cell), the measurement condition is satisfied, and it is reported to the cell B (target cell), and then the cell A initiates the handover flow of the UE from the cell A to the cell B according to the measure report of the UE, but the RLF occurs right after the UE finishes the handover to the cell B, and it accesses to the cell C when re-accessing to the system.

The present embodiment mainly includes the following steps:
31). the RLF occurs after the UE hands over from the cell A to the cell B, and it is rebuilt in the cell C;
32). the cell B judges that the fault of the UE handing over to a wrong cell occurs in the cell A according to the information of the RLF INFORMATION, indicated through the X2 interface, of the cell C, and then informs the cell A of the fault information through the HANDOVER REPORT message on the X2 interface;
33). the handover measurement sent by the cell A is the RSRQ, the RLF occurs in the UE in the cell B, and it rebuilds the connection to the cell C, so the cell A calls out the distribution diagram of the Cumulative Density Function curve CDF (RSRQ) of the measurement RSRQ which is about the cell B and the cell C and is reported by the UE in the handover region historically, and then the RSRQ thresholds of those two cells, RLFthrd_B (RSRQ) and RLFthrd_C (RSRQ), are acquired through the definitions of the RLF thresholds in the wireless scene of the cell B and the cell C and in the protocol;
34). comparing the curves, as shown in FIG. 7, it is found that, in the handover region, the signal quality of the cell B reported by the UE in the present cell is even poorer than the signal quality of the cell C reported by the UE; although only about 10% of the probability density function of the signal quality of the cell B and the cell C is on the left side of the RLF threshold, as the target cell of the handover, such a distribution is a normal one; that is to say, the actual target cell of the handover of the UE should be the cell C, while not the cell B;
35). according to the analysis on the fault, the fault of handing over to a wrong cell occurred in the UE is resulted from the unreasonable configuration of the offset values among the cell A, the cell B and the cell C; the adopted optimization strategy only needs to make the UE hand over to the cell C more easily rather than to the cell B; in this way, the offset values of the cell B and the cell C are adjusted in the cell A, only to make the offset value of the cell C less than the cell C by 3dB;
36). the cell A informs the OAM of the comprehensive scheme of the parameter optimization, including the parameters required to be modified, and the OAM informs the cell A, after evaluating the enforceability of the parameter optimization, to perform the modification according to the designated value;
37). after the network runs for a period of time, the evaluation result of the new parameter is acquired.

In sum, by adopting the present method, a set of effective handover parameter optimization strategies can be provided; by using such a method, the fast and accurate handover parameter optimization in many kinds of MRO fault scenes can be realized, and along with the lengthening of the service time of the system, the reliability will be higher and higher, thus lightening the working difficulty of the detection and the optimization of the network fault greatly.

The above description is only the preferable embodiment of the present document, and is not intended to limit the protective scope of the present document.

### Industrial Applicability

Through the handover parameter optimization method and system described in the present document, the network side acquires the Cumulative Density Function curve (CDF(i)) of the corresponding measurement of the cell handover region according to the measurement value reported by the UE; when the mobility fault occurs in the cell, the network side determines the fault degree of the cell according to the area of the region surrounded by the Cumulative Density Function curve CDF(i) of the measurement reported by the cell and the threshold curve (RLFthrd(i)) of the measurement; and the network side modifies the corresponding handover parameters according to the fault degree of the cell, and causes the area of the region surrounded by the RLFthrd(i) curve and the CDF(i) curve to be reduced. It can be found that, in the embodiment of the present document, on the basis of the statistical result reported by the UE, according to the handover fault degree, the parameters required to be modified and the modification degree of each parameter are determined. The cell only needs to modify all parameters once to realize the optimization of the fault, thus the optimization speed can be improved, and the performance of the self-optimization can also be improved at the same time.

## Claims

1. A handover parameter optimization method, wherein, a network side acquires a Cumulative Density Function curve (CDF(i)) of a corresponding measurement of a cell handover region according to a measurement value reported by a User Equipment (UE), wherein, the i indicates a type of the measurement, and the method comprises:
when a mobility fault occurs in a cell, the network side determining a fault degree of the cell according to an area of a region surrounded by the Cumulative Density Function curve CDF(i) of the measurement reported by the cell and a threshold curve (RLFthrd(i)) of the measurement; and
the network side modifying corresponding handover parameters according to the fault degree of the cell, and causing the area of the region surrounded by the RLFthrd(i) curve and the CDF(i) curve to be reduced.

2. The method according to claim 1, wherein, the measurement is Reference Signal Receiving Power (RSRP) or Reference Signal Received Quality (RSRQ).

3. The method according to claim 1, wherein, the mobility fault is: handing over too late, handing over too early, or handing over to a wrong cell.

4. The method according to any one of claims 1 to 3, wherein, the handover parameters comprise one or more of following terms: a cell individual offset (CIO), a delay parameter, a time to trigger (TTT), a measurement event offset, a measurement event threshold, a measurement report interval, and a measurement report amount.

5. The method according to any one of claims 1 to 3, wherein, the network side sets a maximum number of sample points of the Cumulative Density Function curve (CDF(i)) of the measurement, and
the network side acquiring a Cumulative Density Function curve (CDF(i)) of each measurement of a cell handover region according to a measurement value reported by a User Equipment (UE) is: updating a corresponding Cumulative Density Function curve (CDF(i)) according to the maximum number of the sample points and the measurement value reported by the UE.

6. A handover parameter optimization system, comprising: a Cumulative Density Function curve acquiring unit, a cell fault degree determining unit and a handover parameter modifying unit; wherein,
the Cumulative Density Function curve acquiring unit is configured to acquire a Cumulative Density Function curve (CDF(i)) of a corresponding measurement of a cell handover region according to a measurement value reported by a User Equipment (UE), wherein, the i indicates a type of the measurement;
the cell fault degree determining unit is configured to, when a mobility fault occurs in a cell, determine a fault degree of the cell according to an area of a region surrounded by the Cumulative Density Function curve CDF(i) of the measurement reported by the cell and acquired by the Cumulative Density Function curve acquiring unit and a threshold curve (RLFthrd(i)) of the measurement; and
the handover parameter modifying unit is configured to modify corresponding handover parameters according to the fault degree of the cell determined by the cell fault degree determining unit, and cause the area of the region surrounded by the RLFthrd(i) curve and the CDF(i) curve to be reduced.

7. The system according to claim 6, wherein, the Cumulative Density Function curve acquiring unit acquiring a Cumulative Density Function curve (CDF(i)) of a corresponding measurement of a cell handover region according to a measurement value reported by a User Equipment (UE) is: acquiring the corresponding Cumulative Density Function curve (CDF(i)) according to Reference Signal Receiving Power (RSRP) or Reference Signal Received Quality (RSRQ) reported by the UE.

8. The system according to claim 6, wherein, the cell fault degree determining unit determining the fault degree of the cell when a mobility fault occurs in the cell is: determining the fault degree of the cell when handing over too late, handing over too early or handing over to a wrong cell.

9. The system according to any one of claims 6 to 8, wherein, the handover parameters modified by the handover parameter modifying unit comprise one or more of following terms: a cell individual offset (CIO), a delay parameter, a time to trigger (TTT), a measurement event offset, a measurement event threshold, a measurement report interval, and a measurement report amount.

10. The system according to any one of claims 6 to 8, wherein,
the Cumulative Density Function curve acquiring unit is further configured to set a maximum number of sample points of the Cumulative Density Function curve (CDF(i)) of the measurement, and update a corresponding Cumulative Density Function curve (CDF(i)) according to the maximum number of the sample points and the measurement value reported by the UE.
